# EUROPEAN PATENT APPLICATION

(11) **EP 2 642 748 A1**
(43) Date of publication of application: **25.09.2013**
(21) Application number: 12160750.1
(22) Date of filing: 22.03.2012
(51) Int. Cl.: H04N 5/232

(54) **A camera device for reducing sensor noise**

(71) Applicant: BlackBerry Limited, Waterloo ON N2L 3W8 (CA)
(72) Inventor: Fransson, Johan, Nils, Waterloo, Ontario N2L 3W8 (CA); Kyowski, Timothy, Herbert, Waterloo, Ontario N2L 3W8 (CA); Hong, Sung, Ho, Waterloo, Ontario N2L 3W8 (CA)
(74) Representative: MERH-IP Matias Erny Reichl Hoffmann

(57) **Abstract**

A camera device and a method therefor are provided. The camera comprises: a sensor for acquiring electronic images; a heat generating device; an apparatus for determining a temperature-associated property of the sensor; and a processor in communication with the apparatus. The processor is enabled to: switch the heat generating device to a low power mode when the temperature-associated property meets a threshold value.

## Description

### FIELD

The specification relates generally to camera devices, and specifically to a camera device for reducing sensor noise.

### BACKGROUND

Camera devices are presently equipped with many features for ease of use. However, some of these features can paradoxically cause degradation in image quality.

### SUMMARY

An aspect of the specification provides a camera device comprising: a sensor for acquiring electronic images; a heat generating device; an apparatus for determining a temperature-associated property of the sensor; and a processor in communication with the apparatus, the processor is enabled to: switch the heat generating device to a low power mode when the temperature-associated property meets a threshold value.

The processor can be further enabled to switch the heat generating device to the low power mode by turning off the heat generating device.

The sensor can comprise one or more of a CMOS (Complementary metal-oxide-semiconductor) image sensor and a CCD (charge-coupled device) image sensor.

The apparatus can comprise one or more temperature sensing devices. The one or more temperature sensing devices can be located to sense a temperature of one or more of the sensor and an interior of the camera device. The one or more temperature sensing devices can be located at one or more of: at the sensor, adjacent the sensor, proximal the sensor, and a location for measuring a temperature increase inside the camera device. The threshold value can comprise a temperature above which the images acquired by the sensor become noisy.

The apparatus can comprise a device for determining noise of the sensor. The apparatus can comprise one or more of the processor, a second processor, an image processor and an image processing engine. The threshold value can comprise a given noise level of one or more of: the sensor; images acquired by the sensor; and a signal from the sensor.

The processor can be further enabled to: switch the heat generating device to the low power mode when the temperature-associated property exceeds the threshold value.

The processor can be further enabled to: switch the heat generating device to a high power mode when the temperature-associated property drops below the threshold value. The processor can be further enabled to switch the heat generating device to the high power mode by turning the heat generating device on when the heat generating device is off.

The heat generating device can comprise one or more of a servo-motor, a voice coil motor, a continuous auto-focus device, an image stabilization device, and a flash device.

The camera device can further comprise a communication device. The heat generating device can comprise a portion of the communication device that causes a temperature of the sensor to increase.

The processor can be further enabled to: switch the heat generating device to a high power mode when the temperature-associated property meets a second threshold value, after the heat generating device is switched to the low power mode. The second threshold value can be below the threshold value.

Another aspect of the specification provides a method comprising: switching, via a processor, a heat generating device of a camera device to a low power mode when a temperature-associated property of an electronic image sensor at the camera device meets a threshold value.

A further aspect of the specification provides a computer program product, comprising a computer usable medium having a computer readable program code adapted to be executed to implement a method comprising: switching, via a processor, a heat generating device of a camera device to a low power mode when a temperature-associated property of an electronic image sensor at the camera device meets a threshold value. The computer program product can comprise a non-transitory computer program product.

### BRIEF DESCRIPTIONS OF THE DRAWINGS

For a better understanding of the various implementations described herein and to show more clearly how they may be carried into effect, reference will now be made, by way of example only, to the accompanying drawings in which:

Figs. 1A and 1B depict front and rear views of a camera for reducing sensor noise, according to non-limiting implementations.

Fig. 2 depicts a schematic diagram of the camera Fig. 1, according to non-limiting implementations.

Fig. 3 depicts a block diagram of a method for reducing sensor noise at the camera of Fig. 1, according to non-limiting implementations.

Fig. 4 depicts the camera of Fig. 1 with the method of Fig. 3 implemented therein, according to non-limiting implementations.

Fig. 5 depicts another implementation of a camera for reducing sensor noise, according to non-limiting implementations.

Fig. 6 depicts another implementation of a camera for reducing sensor noise, comprising a communication device, according to non-limiting implementations.

### DETAILED DESCRIPTION

An aspect of the specification provides a camera device comprising: a sensor for acquiring electronic images; a heat generating device; an apparatus for determining a temperature-associated property of the sensor; and a processor in communication with the apparatus, the processor is enabled to: switch the heat generating device to a low power mode when the temperature-associated property meets a threshold value.

The processor can be further enabled to switch the heat generating device to the low power mode by turning off the heat generating device.

The sensor can comprise one or more of a CMOS (Complementary metal-oxide-semiconductor) image sensor and a CCD (charge-coupled device) image sensor.

The apparatus can comprise one or more temperature sensing devices. The one or more temperature sensing devices can be located to sense a temperature of one or more of the sensor and an interior of the camera device. The one or more temperature sensing devices can be located at one or more of: at the sensor, adjacent the sensor, proximal the sensor, and a location for measuring a temperature increase inside the camera device. The threshold value can comprise a temperature above which the images acquired by the sensor become noisy.

The apparatus can comprise a device for determining noise of the sensor. The apparatus can comprise one or more of the processor, a second processor, an image processor and an image processing engine. The threshold value can comprise a given noise level of one or more of: the sensor; images acquired by the sensor; and a signal from the sensor.

The processor can be further enabled to: switch the heat generating device to the low power mode when the temperature-associated property exceeds the threshold value.

The processor can be further enabled to: switch the heat generating device to a high power mode when the temperature-associated property drops below the threshold value. The processor can be further enabled to switch the heat generating device to the high power mode by turning the heat generating device on when the heat generating device is off.

The heat generating device can comprise one or more of a servo-motor, a voice coil motor, a continuous auto-focus device, an image stabilization device, and a flash device.

The camera device can further comprise a communication device. The heat generating device can comprise a portion of the communication device that causes a temperature of the sensor to increase.

The processor can be further enabled to: switch the heat generating device to a high power mode when the temperature-associated property meets a second threshold value, after the heat generating device is switched to the low power mode. The second threshold value can be below the threshold value.

Another aspect of the specification provides a method comprising: switching, via a processor, a heat generating device of a camera device to a low power mode when a temperature-associated property of an electronic image sensor at the camera device meets a threshold value.

A further aspect of the specification provides a computer program product, comprising a computer usable medium having a computer readable program code adapted to be executed to implement a method comprising: switching, via a processor, a heat generating device of a camera device to a low power mode when a temperature-associated property of an electronic image sensor at the camera device meets a threshold value. The computer program product can comprise a non-transitory computer program product.

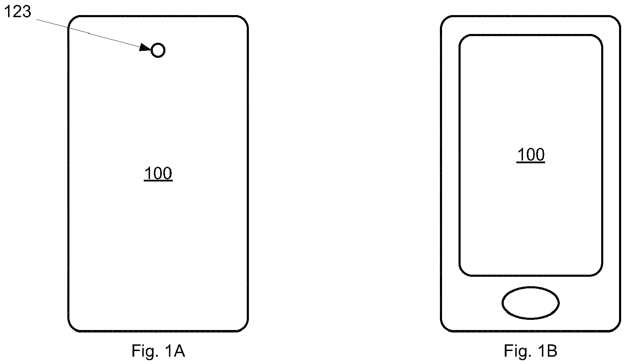

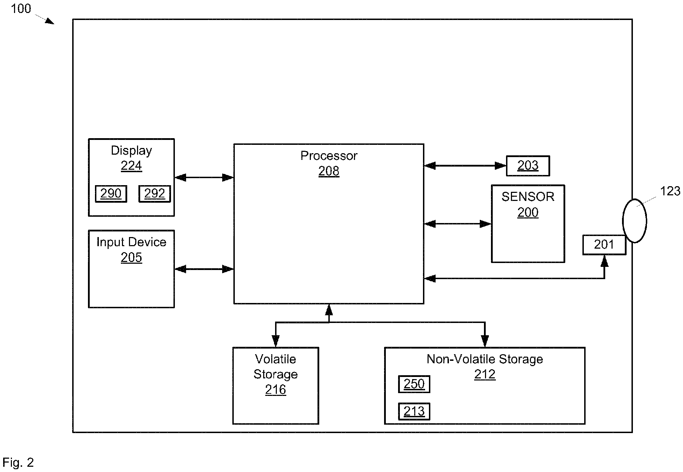

Figs. 1A and 1B depict front and rear views, respectively, of a camera device 100 for reducing sensor noise, while Fig. 2 depicts a schematic diagram of camera device 100, according to non-limiting implementations. Camera device 100 will also be referred to hereafter as camera 100. Camera 100 is generally enabled to acquire digital images via a lens 123, and store the digital images in a memory. In particular, camera 100 generally comprises a sensor 200 for acquiring electronic images; a heat generating device 201; an apparatus 203 for determining a temperature-associated property of sensor 200; and a processor 208 in communication with apparatus 203, processor 208 enabled to: switch heat generating device 201 to a low power mode when the temperature-associated property meets a threshold value. For example, heat generating device 201 can be switched to a low power mode by turning off heat generating device 201. Furthermore, it is presumed that heat generating device 201 is initially in one or more of a high power mode, a full power mode, and/or generally functioning normally (e.g. device 201 is initially "on").

Camera 100 can be any type of camera device that can be used to acquire digital images. Camera 100 can include, but is not limited to, any suitable combination of camera devices, digital cameras, digital SLR (single lens reflex) camera, computing devices, personal computers, laptop computers, portable electronic devices, mobile computing devices, portable computing devices, tablet computing devices, laptop computing devices, desktop phones, telephones, PDAs (personal digital assistants), cellphones, smartphones and the like. Other suitable camera devices are within the scope of present implementations.

With reference to Fig. 2, the depicted structure of camera 100 is purely an example, and is not to be considered particularly limiting. Sensor 200 is generally enabled to acquire digital images by way of light impinging on lens 123 and lens 123 focussing light onto sensor 200. Upon input from an input device 205, a processor 208 causes an image from sensor 200 to be captured and stored in a non-volatile storage 212. However, in other implementations, the image from sensor 200 can be acquired and provided at a display device without storing the image at a memory (e.g. streaming). In some implementations camera 100 further comprises a mechanical shutter, including but not limited to single lens reflex shutter. However in other implementations, camera 100 comprises an electronic shutter.

Sensor 200 generally comprises a device for acquiring digital images, including but not limited to one or more of a CMOS (Complementary metal-oxide-semiconductor) image sensor and a CCD (charge-coupled device) image sensor. However, any suitable device for acquiring digital images is within the scope of present implementations.

It is further appreciated that the digital images acquired by the sensor 200 can include, but are not limited to, still digital images, digital video, digital video stills and image streaming. It is further appreciated that the digital images can be rendered at a display device but not necessarily stored at a memory (e.g. streaming).

Heat generating device 201, also referred to hereafter as device 201, is generally appreciated to comprise a device and/or feature which generates heat, thereby causing the temperature of sensor 200 to increase. Hence, device 201 leads to noise at sensor 200, which in turn leads to noisy digital images being acquired by sensor 200 as sensor 200 increases in temperature.

In some implementations, device 201 comprises a device for improving ease of use of camera 200, such as a continuous auto-focus (CAF) device and/or an image stabilization device. Hence, while in these implementations, device 201 improves ease of use of camera 200, over time device 201 can degrade digital image quality as device 201 produces heat which raises the temperature of sensor 200.

Device 201 can include, but is not limited to one or more of a servo-motor, a voice coil motor, a continuous auto-focus (CAF) device, an image stabilization device, a flash unit (e.g. an LED and the like), a device that shares a heat sink with sensor 200 and/or has a heat sink located proximal sensor 200, and the like. However, any heat generating device is within the scope of present implementations.

When heat generating device 201 comprises one or more of a servo-motor, a voice coil motor and a CAF device, device 201 can be enabled to automatically move lens 123 to better focus light impinging on sensor 200, for example in conjunction with processor 208 and/or an image processor determining how to move lens 123 to focus on features in view of lens 123. In other words, sensor 200 senses light from lens 123, processor 208 and/or an image processor processes a signal from sensor 200 to determine which features in view of lens 123 are to be focussed on, and processor 208 controls device 201 accordingly to move lens 123, for example in or out of camera 100, to focus on the determined feature. Hence, one or more of a servo-motor and a voice coil motor moves lens 123 under control of processor 208. It is further appreciated that CAF can be turned on at camera 200, either manually, for example via input device 205, or automatically.

When CAF is on, movement of lens 123 can be generally continuous, as sensor 200, processor 208 and/or an image processor and device 201 are appreciated to be in a feedback loop to generally continuously focus on features in view of lens 123. When camera 100 is moving, and/or when features in view of lens 123 are moving, camera 100 can be in almost constant motion, and hence device 201 generates heat continuously, leading to a rise in temperature of sensor 200. Indeed, in some implementations, sensor 200, device 201 and lens 123 can further be in a confined space as lens 123 and sensor 200 are generally adjacent; hence device 201 is also generally adjacent sensor 200. Such proximity can make the problem of heat related noise at sensor 200 particularly pernicious.

It is appreciated, however, that present implementations are not limited to CAF devices, and indeed any suitable heat generating device 201 is within the scope of present implementations. For example, device 201 could also comprise an image stabilization device for stabilizing sensor 200. Such image stabilization devices are appreciated to keep sensor 200 steady, for example when camera 100 is moving, and can include gyroscopic devices and the like. However, such image stabilization devices are also known to generate heat and hence cause temperature of sensor 200 to increase.

Camera 100 further comprises apparatus 203 for determining a temperature-associated property of sensor 200. Temperature-associated properties can include, but are not limited to, a temperature of sensor 200, a temperature proximal sensor 200, a temperature of an interior of camera 100, and noise at sensor 200.

For example, in depicted implementations, apparatus 203 comprises a temperature sensing device, including but not limited to bolometers, bimetallic strips, heat flux sensors, infrared thermometers, microbolometers, quartz thermometers, resistance temperature detectors, resistance thermometers, silicon bandgap temperature sensors, temperature gauges, thermistors, thermocouples, thermometers and the like.

In these implementations, apparatus 203 is located to sense a temperature of one or more of sensor 200 and an interior of camera 100. Locations of apparatus can include, but are not limited to, at sensor 200, adjacent sensor 200, proximal sensor 200, and a location for measuring a temperature increase inside camera 100. In other words, apparatus 203 need not measure temperature of sensor 200 directly, but can measure temperature near sensor 200 and/or temperature of an interior of camera 100 on the assumption that the temperature of sensor 200 will rise when the temperature of the interior of camera 100 rises.

Further, it is appreciated that while present implementations are described with regards to measurement of temperature, in some implementations temperature can be measured indirectly, for example by measuring a parameter from which temperature can be derived. For example, with some of the temperature sensing devices described above, a property is determined that is related to temperature, such as a resistance of a resistance thermometer, but is not strictly a temperature measurement; nonetheless changes can occur to the property that are one or more of associated with changes in temperature and from which changes in temperature can be derived and/or inferred.

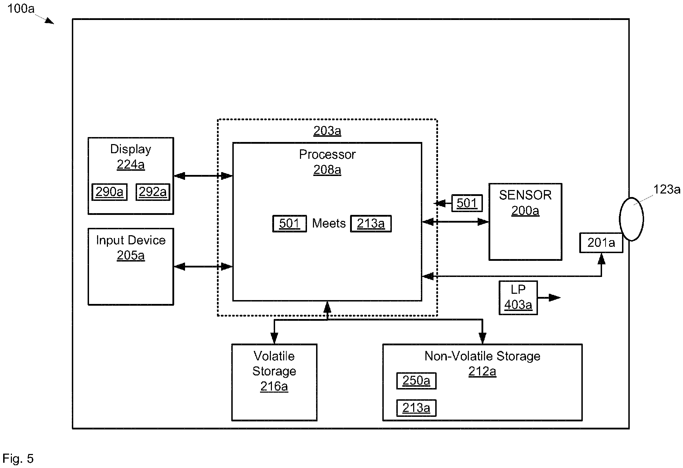

However, apparatus 203 is not limited to temperature sensing devices. Rather, in other implementations, described below with reference to Fig. 5 apparatus 203 can comprise an apparatus for determining noise at sensor 200, wherein noise at sensor 200 is associated with a temperature of sensor 200.

In any event, in order reduce the risk of noise at sensor 200, processor 208 is hence generally enabled to: switch heat generating device 201 to a low power mode when a temperature-associated property determined by apparatus 203 meets a threshold value. For example, threshold value can be stored as threshold value data 213 at non-volatile storage 212. The threshold value can be a pre-determined value and provisioned at camera 100, for example when manufactured, and/or at a factory, and/or when camera 100 is programmed.

In implementations where apparatus 203 determines a temperature sensing device, it is appreciated that the threshold value can comprise a temperature above which sensor 200 becomes too noisy, and/or a temperature at which sensor 200 becomes too noisy. It is appreciated that all sensors can be noisy to a degree at most temperatures, "too noisy" can be defined by way of the threshold value and is generally appreciated to comprise a noise level where noise in images acquired by sensor 200 becomes visible to the human eye. However, the threshold value can comprise any suitable value.

In implementations where apparatus 203 determines a property that is associated with temperature, it is appreciated that the threshold value can comprise a value of the property associated with a temperature above which sensor 200 becomes noisy, and/or a temperature at which sensor 200 becomes noisy.

As will be described below, in implementations where apparatus 203 determines a noise at sensor 200, it is appreciated that the threshold value can comprise a given noise level of one or more of: sensor 200; images acquired by sensor 200; and a signal from sensor 200, including but not limited to an image signal.

In any event, processor 208 is generally enabled to automatically switch heat generating device 201 to a low power mode when a temperature-associated property of sensor 200 meets a threshold value.

Further elements of camera 100 will now be described.

Camera 100 comprises at least one input device 205 generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations.

Input from input device 205 is received at processor 208 (which can be implemented as a plurality of processors, including but not limited to one or more central processing units (CPUs)). Processor 208 is configured to communicate with a non-volatile storage unit 212 (e.g. Erasable Electronic Programmable Read Only Memory ("EEPROM"), Flash Memory) and a volatile storage unit 216 (e.g. random access memory ("RAM")). Programming instructions that implement the functional teachings of camera 100 as described herein are typically maintained, persistently, in non-volatile storage unit 212 and used by processor 208 which makes appropriate utilization of volatile storage 216 during the execution of such programming instructions. Those skilled in the art will now recognize that non-volatile storage unit 212 and volatile storage 216 are examples of computer readable media that can store programming instructions executable on processor 208. Furthermore, non-volatile storage unit 212 and volatile storage 216 are also examples of memory units and/or memory modules. It is further appreciated that digital images acquired at camera 100 can be stored at non-volatile storage 212.

In some implementations, processor 208 comprises an image processor and an image processing engine. In other implementations, camera 100 further comprises one or more of an image processor and an image processing engine implemented at one or more second processors in communication with processor 208. For example, one or more of processor 208, a second processor, an image processor and an image processing engine can be enabled to implement a CAF function and/or control an image stabilizer by processing images and/or a signal from sensor 200 to determine how to control device 201.

Hence, processor 208 and/or the second processor and/or the image processor and/or the image processing engine can be further enabled to communicate with sensor 200 to receive images and/or a signal there from for processing and/or analysis.

Processor 208 can be further enabled to control device 201, for example to switch device 201 between a high power mode and a low power mode, for example by transmitting suitable commands to device 201 and/or by controlling power to device 201. Processor 208 can be further enabled to communicate with apparatus 203 to determine the temperature-associated property of sensor 200 to determine when to switch device 201 to a low power mode.

Processor 208 can be further configured to communicate with a display 224. Display 224 comprises any suitable one of or combination of CRT (cathode ray tube) and/or flat panel displays (e.g. LCD (liquid crystal display), plasma, OLED (organic light emitting diode), capacitive or resistive touchscreens, and the like). It is generally appreciated that display 224 comprises circuitry 290 that can be controlled, for example by processor 208, to render a representation 292 of data at display 224.

In some implementations, input device 205 and display 224 are external to camera 100, with processor 208 in communication with each of input device 205 and display 224 via a suitable connection and/or link.

In particular, it is appreciated that non-volatile storage 212 stores an application 250 for reducing sensor noise. When processor 208 processes application 250, processor 208 is enabled to: switch heat generating device 201 to a low power mode when the temperature-associated property meets a threshold value. For example, processor 208 can be enabled to: automatically switch heat generating device 201 to a low power mode when the temperature-associated property meets a threshold value.

In some implementations, when processor 208 processes application 250, processor 208 can be further enabled to: switch heat generating device 201 to a high power mode when the temperature-associated property meets a second threshold value, after turning off heat generating device 201. In other words, once sensor 200 cools down after device 201 is turned off, processor 208 can switch device 201 to a high power mode; in some implementations, switching device 201 to a high power mode comprises turning device 201 back on.

It is further appreciated that processor 208 can store a camera application (not depicted) for operating camera 100, for example, to control camera 100 to acquire digital images. In some implementations, application 250 can comprises a module of the camera application. Further, upon processing the camera application, and/or application 250, processor 208 can control circuitry 290 in display device 224 to render aspects of the camera application and/or application 250 in representation 292.

While not depicted, it is further appreciated that camera 100 further comprises a power source, including but not limited to a battery.

In any event, it should be understood that in general a wide variety of configurations for camera 100 are contemplated.

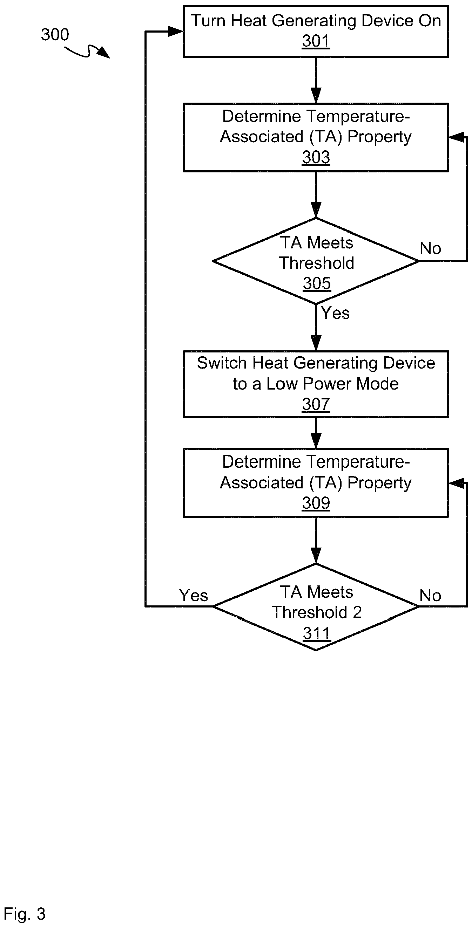

Attention is now directed to Fig. 3 which depicts a method 300 for reducing sensor noise at a camera device, according to non-limiting implementations. In order to assist in the explanation of method 300, it will be assumed that method 300 is performed using camera 100. Furthermore, the following discussion of method 300 will lead to a further understanding of camera 100 and its various components. However, it is to be understood that camera 100 and/or method 300 can be varied, and need not work exactly as discussed herein in conjunction with each other, and that such variations are within the scope of present implementations.

It is appreciated that, in some implementations, method 300 can be implemented in camera 100 by processor 208 of camera 100. However, aspects of method 300 can be implemented in one or more of processor 208, a second processor, an image processor and an image processing engine. However, in the following description, method 300 will be described with reference to implementing method 300 at processor 208. Indeed, method 300 is one way in which camera 100 can be configured. It is to be emphasized, however, that method 300 need not be performed in the exact sequence as shown, unless otherwise indicated; and likewise various blocks may be performed in parallel rather than in sequence; hence the elements of method 300 are referred to herein as "blocks" rather than "steps". It is also to be appreciated, however, that method 300 can be implemented on variations of camera 100.

Method 300 will also be described with reference to Fig, 4, which is similar to Fig. 2, with like elements having like numbers.

At block 301, device 201 is switched to a high power mode either manually or automatically. When manual, device 201 can be switched to a high power mode by processor 208 upon receipt of input data at input device 205 indicative that device 201 is to be switched to a high power mode. For example, block 301 can be representative of a CAF feature and/or an image stabilization feature being selected via input device 205 for use at camera 100. When automatic, device 201 can be switched to a high power mode when a given condition is met for switching device 201 to a high power mode; for example device 201 can be switched to a high power mode automatically when camera 100 is turned on. Device 201 can also be switched to a high power mode automatically when camera 100 is turned on and device 201 had been in a high power mode when camera 100 was last turned off. However the conditions under which device 201 is switched to a high power mode are generally appreciated to be non-limiting. The high power mode can include but is not limited to a full power mode, an on state, a normal operating mode and the like. It is appreciated that the high power mode need not be a full power mode: for example, the high power mode can comprise the normal operating mode with device 201 switching to a full power mode occasionally.

At block 303, a temperature-associated property of sensor 200 is determined. For example processor 208 receives data 401 from apparatus 203, wherein data 401 is generally indicative of a temperature-associated property of sensor 203 as determined by apparatus 203, as described above. In some implementations, processor 208 can request data 401 from apparatus 203, for example periodically. In other implementations, apparatus 203 can be enabled to automatically transmit data 401, for example periodically.

At block 305, processor 208 determines when the temperature-associated property meets a threshold value. For example, data 401 is compared with threshold value data 213 retrieved from non-volatile storage 212 to and it is determined when data 401 meets threshold value data 213. It is further appreciated that data 401 and threshold value data 213 are generally commensurate with one another; that is, when data 401 comprises a temperature value, threshold value data 213 comprises a temperature value; alternatively, when data 401 comprises a value associated with temperature, but is not strictly a temperature value, threshold value data 213 is of a similar type.

In some implementations, however, block 305 can be implemented at sensor 200: in other words, in some implementations, sensor 200 can either comprise apparatus 203 and/or be in communication with apparatus 203, and further comprise a processor.

In any event, in order for data 401 to meet threshold value data 213, an exact match is not necessary. For example, processor 208 can determine that data 401 meets threshold value data 213 when data 401 is within a given range of threshold value data 213, for example within a given margin of threshold value 213. Indeed, when data 401 is changing rapidly, and/or when a sampling rate of data 401 is slow in comparison to a rate of change of data 401, an exact match is unlikely. Hence, for example, data 213 can be determined to meet threshold value data 213 when data 401 is within any given margin of threshold value data 213, for example 0-15% of threshold value data 213.

In any event, when the temperature-associated property does not meet a threshold value at block 305, blocks 303 and 305 are re-implemented in a loop until the temperature-associated property meets the threshold value at block 305.

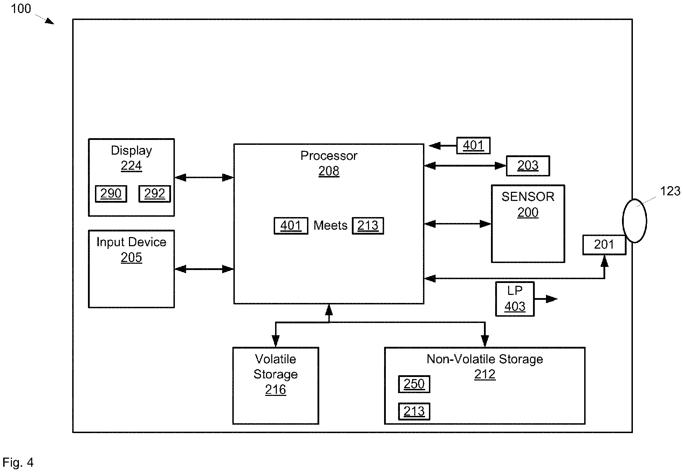

When the temperature-associated property meets a threshold value, at block 307 processor 208 turns off heat generating device 201, for example by transmitting a command 403 to switch device 201 to a low power mode and/or turning off power to device 201 and/or controlling power to device 201 and/or by turning off power to device 201. In Fig. 4, "LP" at command 403 indicates "Low Power"

Examples of a switching device 201 to a low power mode can include, but are not limited to: turning device 201 off; when device 201 comprises a motor, placing the motor into a low power mode, for example a mode where the motor moves slower than in a high power mode; when device 201 comprises an image stabilization device, placing the image stabilization device into a mode where image stabilization occurs slower than in a high power mode; when device 201 comprises a flash device, placing the flash device into a lower brightness mode; and a combination thereof. Indeed, any suitable low power mode is within the scope of present implementations.

In yet further implementations, block 307 can comprise switching device 201 to a low power mode when the temperature-associated property meets or exceeds the threshold value. In other words, in some implementations, data 401 can be within a margin of threshold value 213 or above threshold value 213 for processor 208 to switch device 201 to a low power mode.

In some implementations, in association with block 307, processor 208 can control display device 224 to render text indicating that device 201 is turned off and/or processor 208 can control display device 224 to render text indicating that sensor 200 and/or camera 100 is too hot.

In some implementations, method 300 ends at block 307.

However, in other implementations, at optional block 309, similar to block 303, processor 208 can again determine the temperature-associated property of sensor 200. In other words, after device 201 is turned off, processor 208 continues to monitor the temperature-associated property.

Then, at optional block 311, similar to block 305, processor 208 determines when the temperature-associated property meets a second threshold value, after turning off heat generating device 201; and, in response, turns on heat generating device 201. For example, second threshold value data can be stored at non-volatile storage 212 similar to threshold value data 213. It is appreciated that the second threshold value can be below the threshold value for turning device 201 off. However, in other implementations, the second threshold value can be similar to and/or comprise the threshold value for turning device 201 off. In yet further implementations, the second threshold can be above the first threshold when the temperature associated property of sensor 200 becomes lower at higher temperatures. In any event, blocks 309 and 311 can be implemented to automatically turn device 201 back on once sensor 200 cools down.

Attention is next directed to Fig. 5 which depicts a camera 100a similar to camera 100; Fig. 5 is similar to Fig. 2, with like elements having like numbers however with an "a" appended thereto. Camera 100a hence generally comprises a lens 123a, a sensor 200a, a heat generating device 201a, apparatus 203a, an input device 205a, a processor 208a, non-volatile storage 212a, volatile storage 216a, and a display 224a. In contrast to camera 100, however, camera 100a, apparatus 203a comprises one or more of processor 208a (as depicted), a second processor, an image processor and an image processing engine. In other words, apparatus 203a for determining the temperature-associated property of sensor 200a comprises a processor, and the temperature-associated property comprises a noise level of one or more of sensor 200a, images acquired by sensor 200a and a signal from sensor 200a, including but not limited to an image signal. Hence, the threshold value as stored at threshold value data 213a, comprises a given noise level of one or more of: sensor 200a; images acquired by sensor 200a; and a signal from sensor 200a, including but not limited to a given noise level of sensor 200a.

Hence, when method 300 is implemented at camera 100a, at block 303 the temperature-associated property of sensor 200a is determined by receiving data 501 from sensor 200a at processor 208a, wherein data 501 comprises one or more of: images acquired at sensor 200a and a signal from sensor 200a, including but not limited to an image signal. At block 305, data 501 is compared to threshold value data 213a to determine whether data 501 meets threshold value data 213a. In other words, data 501 is indicative of a noise level of sensor 200a, which in turn is associated with a temperature of sensor 200a; when the noise level meets a threshold noise level, processor 208a turns device 201a off via command 403a.

It is appreciated that device 201a can be turned off at any given noise level. Indeed a low tolerance for noise can be implemented at camera 100a when threshold value data 213a indicates a noise level that is relatively small. It is appreciated that a noise level threshold can be suitably specified with regard to a given sensor and/or camera device; for example, some sensors and/or camera devices can be noisier than others without noticeably affecting image quality. However, in some implementations, any indication of noise within data 501 can cause device 201b to be switched to a low power mode.

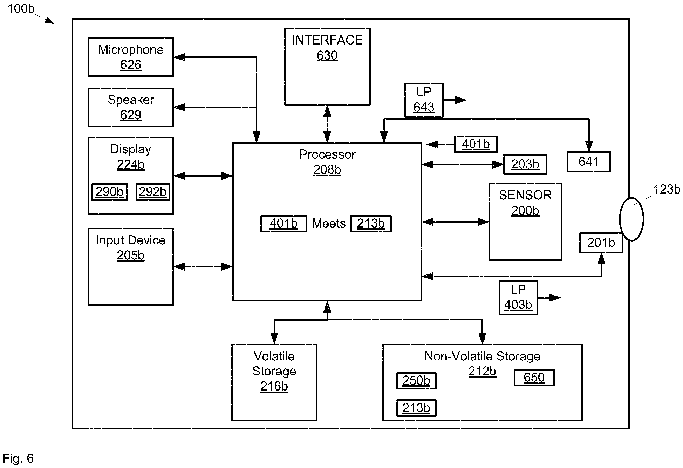

Attention is next directed to Fig. 6 which depicts a camera 100b similar to camera 100; Fig. 6 is similar to Fig. 2 with like elements having like numbers however with a "b" appended thereto. Camera 100b hence generally comprises a lens 123b, a sensor 200b, a heat generating device 201b, apparatus 203b, an input device 205b, a processor 208b, non-volatile storage 212b, volatile storage 216b, and a display 224b. However, in these implementations, camera 100b comprises a communication device. Hence, processor 208b can also be configured to communicate with a microphone 626 and a speaker 629. Microphone 626 comprises any suitable microphone for receiving sound data to transmit to remote communication devices, and speaker 629 comprises any suitable speaker for providing sound data, audible alerts, audible communications and the like from remote communication devices. Further processor 208b also connects to a network communication interface 630, referred to hereafter as interface 630, which can be implemented as one or more radios configured to communicate over a link with a communication network. In general, it will be appreciated that interface 630 is configured to correspond with the network architecture that is used to implement a given link with a communication network. In other implementations a plurality of links with different protocols can be employed and thus interface 630 can comprise a plurality of interfaces to support each link.

Non-volatile storage 212b further stores a communication application 650 for managing communication at camera 100b. Indeed, it is appreciated that camera 100b can be enabled to conduct any suitable communications via interface 630 and application 650, including but not limited to making and receiving phone calls, sending and receiving messages, such as email and text messages, and the like.

In any event, camera 100b can further comprise a heat generating device 641 which comprises a portion of communication device that causes a temperature of sensor 200b to increase. While device 641 is depicted as an independent element of camera 100b, it is appreciated that device 641 can comprise display 224b, microphone 626, speaker 629, and interface 630. However device 641 can further comprise any portion of communication device that causes temperature of sensor 200b to increase, including but not limited to lights, voice coils, and the like. Indeed, any heat generating device that can be in a communication device is within the scope of present implementations.

In these implementations, method 300 can be implemented at camera 100b and processor 208b can be enabled to determine when the temperature-associated property of sensor 200b meets a threshold value, as described above with reference to blocks 303, 305; and, in response at block 307, switch heat generating device 641 and/or heat generating device 201b to a low power mode. Processor 208b can switch device 641 to a low power mode by transmitting a command 643 to device 641 and/or by controlling power to device 641.

It is further appreciated that present implementations have been described with reference to a temperature-associated property of a sensor increasing. However, in other implementations, the temperature-associated property can have an inverse relationship with temperature, and hence threshold values can be provided below which a heat generating device is turned off. Hence, a processor determining when a temperature-associated property meets a threshold value can be further construed as the temperature-associated property falling below or rising above the threshold value depending on the nature of a relationship between temperature-associated property and temperature of a sensor.

In general, however, by turning off a heat generating device at a camera when a temperature-associated property of a sensor meets a threshold, image quality of the camera can be improved by preventing heat-related noise from occurring at the sensor. Further, power can be saved at the camera when the heat generating device is turned off. This can also lead to improvements in battery life if the heat generating device is also heating up the battery of the camera as batteries become less efficient at higher temperatures.

Those skilled in the art will appreciate that in some implementations, the functionality of camera 100, 100a, 100b can be implemented using pre-programmed hardware or firmware elements (e.g., application specific integrated circuits (ASICs), electrically erasable programmable read-only memories (EEPROMs), etc.), or other related components. In other implementations, the functionality of camera 100, 100a, 100b can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A camera device (100, 100a, 100b) comprising:
a sensor (200, 200a, 200b) for acquiring electronic images;
a heat generating device (201, 201a, 201b, 641);
an apparatus (208, 208a, 208b, 203, 203a, 203b) for determining a temperature-associated property of the sensor (200, 200a, 200b); and
a processor (208, 208a, 208b) in communication with the apparatus (208, 208a, 208b, 203, 203a, 203b), the processor (208, 208a, 208b) is enabled to:
switch the heat generating device (201, 201a, 201b, 641) to a low power mode when the temperature-associated property meets a threshold value.

2. The camera device (100, 100a, 100b) of claim 1, wherein the processor (208, 208a, 208b) can be further enabled to switch the heat generating device (201, 201a, 201b, 641) to the low power mode by turning off the heat generating device (201, 201a, 201b, 641).

3. The camera device (100, 100a, 100b) of claim 1 or 2, wherein the apparatus (208, 208a, 208b, 203, 203a, 203b) comprises one or more temperature sensing devices (203, 203a, 203b).

4. The camera device (100, 100a, 100b) of claim 3, wherein the one or more temperature sensing devices (203, 203a, 203b) are located to sense a temperature of one or more of the sensor (200, 200a, 200b) and an interior of the camera device (100, 100a, 100b).

5. The camera device (100, 100a, 100b) of claim 3 or 4, wherein the one or more temperature sensing devices (203, 203a, 203b) are located at one or more of: at the sensor (200, 200a, 200b), adjacent the sensor (200, 200a, 200b), proximal the sensor (200, 200a, 200b), and a location for measuring a temperature increase inside the camera device (100, 100a, 100b).

6. The camera device (100, 100a, 100b) of any of claims 3 to 5, wherein the threshold value comprises a temperature above which images acquired by the sensor (200, 200a, 200b) become noisy.

7. The camera device (100, 100a, 100b) of any previous claim, wherein the apparatus (208, 208a, 208b, 203, 203a, 203b) comprises a device (208, 208a, 208b) for determining noise of the sensor (200, 200a, 200b).

8. The camera device (100, 100a, 100b) of claim 7, wherein the apparatus (208, 208a, 208b, 203, 203a, 203b) comprises one or more of the processor (208, 208a, 208b), a second processor, an image processor and an image processing engine.

9. The camera device (100, 100a, 100b) of claim 7 or 8, wherein the threshold value comprises a given noise level of one or more of: the sensor (200, 200a, 200b); images acquired by the sensor (200, 200a, 200b); and a signal from the sensor (200, 200a, 200b).

10. The camera device (100, 100a, 100b) of any previous claim, wherein the processor (208, 208a, 208b) can be further enabled to:
switch the heat generating device (201, 201a, 201b, 641) to the low power mode when the temperature-associated property exceeds the threshold value.

11. The camera device (100, 100a, 100b) of any previous claim, wherein the processor (208, 208a, 208b) can be further enabled to:
switch the heat generating device (201, 201a, 201b, 641) to a high power mode when the temperature-associated property drops below the threshold value.

12. The camera device (100, 100a, 100b) of claim 11, wherein the processor (208, 208a, 208b) can be further enabled to switch the heat generating device (201, 201a, 201b, 641) to the high power mode by turning the heat generating device (201, 201a, 201b, 641) on when the heat generating device (201, 201a, 201b, 641) is off.

13. The camera device (100, 100a, 100b) of any previous claim, further comprising a communication device.

14. The camera device (100, 100a, 100b) of claim 13, wherein the heat generating device (201, 201a, 201b, 641) comprises a portion of the communication device that causes a temperature of the sensor (200, 200a, 200b) to increase.

15. The camera device (100, 100a, 100b) of any previous claim, wherein the processor (208, 208a, 208b) can be further enabled to:
switch the heat generating device (201, 201a, 201b, 641) to a high power mode when the temperature-associated property meets a second threshold value, after the heat generating device (201, 201a, 201b, 641) is switched to the low power mode.
